# EUROPÄISCHE PATENTANMELDUNG

(11) **EP 0 853 016 A2**
(43) Veröffentlichungstag der Anmeldung: **15.07.1998**
(21) Anmeldenummer: 98100301.5
(22) Anmeldetag: 09.01.1998
(51) Int. Cl.: B60K 37/02

(54) **Informationseinrichtung für ein Kraftfahrzeug**

(30) Priorität: 09.01.1997 DE 19700515
(71) Anmelder: AGUTI PRODUKTENTWICKLUNG & DESIGN GMBH, 88079 Kressbronn (DE)
(72) Erfinder: Grieger, Andreas, 88079 Kressbronn (DE)
(74) Vertreter: Fiener, Josef

(57) **Zusammenfassung**

Zur optimalen Anordnung im Sichtbereich des Fahrers zusammen mit einer einfachen, sicheren Bedienung und Umrüstmöglichkeit wird bei einer Informationseinrichtung (1) für ein Kraftfahrzeug (2) vorgeschlagen, daß der Monitor (5) auf der Oberseite der Abdeckung (6') der Armaturentafel (6) aufklappbar angeordnet ist. Diese aufklappbare Anordnung eignet sich insbesondere für ein Navigationssystem.

## Beschreibung

Die Erfindung betrifft eine Informationseinrichtung für ein Kraftfahrzeug gemäß den oberbegrifflichen Merkmalen des Patentanspruches 1.

Eine derartige Informationseinrichtung für ein Kraftfahrzeug ist z. B. aus der DE-A-38 42 414 bekannt. Die dort beschriebene Informationseinrichtung für ein Kraftfahrzeug weist eine Eingabeeinheit, eine mit einem Monitor versehene Ausgabeeinheit und eine Steuereinheit zur Steuerung von im Kraftfahrzeug vorgesehenen elektrischen Geräten auf. Die Steuereinheit dient dabei zur Steuerung von Einstellparametern, z. B. der Eingabe von Daten für ein Ortungs- und Navigationssystem oder dgl.. Obwohl hierbei vorgeschlagen wird, daß der Bildschirm des Monitors zur Anzeige von Daten in mehrere Bereiche aufgeteilt ist, ist dadurch die Bedienungsfreundlichkeit der Informationseinrichtung noch verbesserungsfähig. Insbesondere bei der Anwendung für ein Ortungs- und Navigationssystem ist der Bedienkomfort trotz einer derartigen Menubedienung recht mangelhaft, insbesondere da die Bedienknöpfe eine Vielzahl von Funktionen aufweisen und daher sehr häufig äußerste Konzentration bei der Bedienung erfordern. Zudem sind derartige Bedienelemente der Eingabeeinheit im allgemeinen in der Mittelkonsole des Kraftfahrzeuges angeordnet, so daß der Fahrer zur Bedienung der Informationseinheit seinen Blick häufig von der Straße abwenden muß.

Darüberhinaus sind derartige Informationseinrichtungen wie Navigationssysteme oder Autoradios im allgemeinen fest im Kraftfahrzeug installiert, beispielsweise im Mitteltunnel oder der Monitor des Navigationssystems neben den üblichen Instrumenten fest im Armaturenbrett eingebaut. Somit ist das Navigationssystems nur für das jeweilige Kraftfahrzeug zu nutzen, so daß beispielsweise bei der Benutzung eines Zweitwagens eine Umrüstung des Navigationssystems zu aufwendig wäre und somit im allgemeinen unterbleibt.

Demzufolge liegt der Erfindung die Aufgabe zugrunde, eine Informationseinrichtung für ein Kraftfahrzeug zu schaffen, das eine optimale Anordnung im Sichtbereich des Fahrers, eine einfache, sichere Bedienung und eine einfache Umrüstmöglichkeit erlaubt.

Diese Aufgabe wird gelöst durch eine Informationseinrichtung mit den Merkmalen des Patentanspruches 1.

Durch die ausklappbare Anordnung der als Monitor ausgestalteten Ausgabeeinheit auf der Blendschutz-Abdeckung der Armaturentafel liegt der Bildschirm im unmittelbaren Betrachtungsfeld des Fahrers, so daß dieser für das Lesen der Information, beispielsweise aus einem Navigationssystem, den Blick von der Straße nicht abwenden muß. Entsprechendes gilt auch für die vorzugsweise in unmittelbarer Nähe des Bildschirmes angeordneten Bedienelemente der Eingabeeinheit, die der Fahrer, ohne die Hände von dem Lenkrad zu nehmen, bedienen kann. Zudem erlaubt die Anordnung auf dem Armaturenbrett aufgrund der dort allgemein vorgesehenen Blendschutz-Abdeckung eine besonders rasche Umrüstung von einem Fahrzeug zum anderen, da die Informationseinrichtung vorzugsweise durch Klammern oder Schnellverschlüsse auf der Oberseite des Armaturenbrettes befestigt werden kann. Somit eignet sich diese Informationseinrichtung insbesondere auch zur Nachrüstung. Der Monitor bzw. Bildschirm der Informationseinrichtung ist hierbei auf dem Armaturenbrett aufklappbar ausgebildet, wobei die Schwenkrichtung vom Fahrer weg gerichtet sein kann, jedoch aber auch zum Fahrer hin verlaufen kann. Somit ist das Informationsmodul in unmittelbarer Reichweite des Fahrers knapp oberhalb des Lenkradkranzes angeordnet, ohne hierbei die Lenkbewegung zu stören.

Weitere vorteilhafte Ausgestaltungen sind Gegenstand der abhängigen Ansprüche.

Nachfolgend wird ein Ausführungsbeispiel der vorgeschlagenen Informationseinrichtung für ein Kraftfahrzeug anhand der Zeichnungen näher erläutert und beschrieben. Hierbei zeigen:
- Fig. 1: eine schematische Seitenansicht mit der Anbringung der Informationseinrichtung auf der Abdeckung einer Armaturentafel eines Kraftfahrzeuges; und
- Fig. 2: eine um 90° gedrehte Vorderansicht auf die Informationseinrichtung aus der Blickrichtung eines Fahrers des Kraftfahrzeuges.

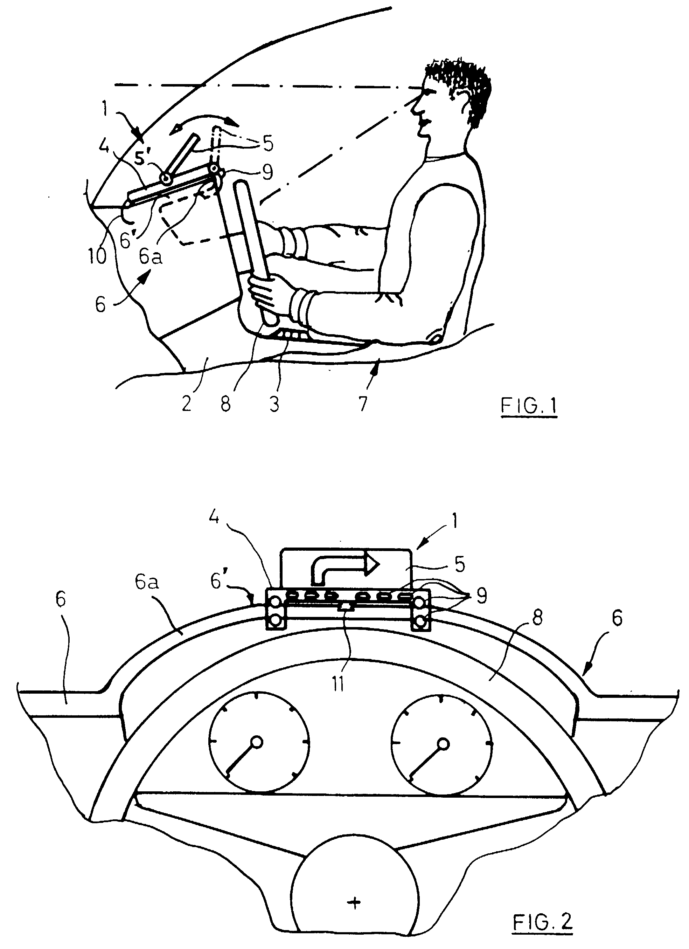

In Fig. 1 ist in schematischer Seitenansicht eine Informationseinrichtung 1 für ein Kraftfahrzeug 2 dargestellt, das lediglich im Fahrerbereich angedeutet ist. Die Informationseinrichtung 1 umfaßt auch eine Eingabeeinheit 3, die hier im Griffbereich zwischen dem Fahrer 7 und dem Lenkrad 8, beispielsweise auf einem Mitteltunnel des Kraftfahrzeuges 2 angeordnet ist. An dieser Eingabeeinheit 3 kann beispielsweise das Fahrziel einprogrammiert werden, so daß bei einem Navigationssystem mit CD-ROM als Datenspeicher die entsprechenden Richtungshinweise im Bereich der Armaturentafel 6 angezeigt werden. Hierzu weist eine modulartig gestaltete und auf der Armaturentafel 6 aufgesetzte Ausgabeeinheit 4 einen Monitor 5 auf.

Der Monitor 5 ist hierbei neuerungsgemäß auf der Oberseite der Abdeckung 6' der Armaturentafel 6 aufklappbar angeordnet. Diese Abdeckung 6' dient üblicherweise als Blendschutz für die Instrumente (Tachometer, Drehzahlmesser usw., wie in Fig. 2 dargestellt) der Armaturentafel 6 und ist daher in der in Fig. 2 dargestellten haubenartigen Form bei nahezu jedem Kraftfahrzeug vorhanden. Die zum Fahrer 7 bzw. zum Lenkradkranz 8 zugewandte Kante 6a der Abdeckung 6' kann hierbei zur Befestigung der Ausgabeeinheit 4 mit dem Monitor 5 dienen. Insbesondere kann hierbei die relativ schmale Kante 6a der oberen Abdeckung 6' umgriffen werden, wie dies hier dargestellt ist, so daß sich hierdurch eine formschlüssige Halterung der Ausgabeeinheit 4 zusammen mit dem Monitor 5 sichergestellt ist. Obwohl eine derartige Umgriffshalterung an der Kante 6a ausreicht, um die Ausgabeeinheit 4 selbst bei heftigen Bremsmanövern oder sogar im Falle eines Aufpralles sicher zu fixieren, können auch an der gegenüberliegenden Seite, beispielsweise durch Eingriff in Lüftungsschlitze noch Schnellverschlüsse 10 zur Fixierung vorgesehen sein.

Der Bildschirm bzw. Monitor 5 der Ausgabeeinheit 4 ist hierbei in das Blickfeld des Fahrers 7 aufklappbar angeordnet. Hierdurch ergibt sich in der Nicht-Gebrauchsstellung eine platzsparende Aufbewahrung, sowie auch eine einfache Reinigung, da der Monitor 5 im abgeklappten Zustand bevorzugt bündig mit der Oberseite der modulartigen Ausgabeeinheit 4 abschließt. Dies ist insbesondere auch deshalb zweckmäßig, da derartige Informationseinrichtungen für Navigationssysteme im Heimatkreis ohnehin kaum eingesetzt werden, sondern nur bei größeren Reisen. Zudem kann durch die aufklappbare Ausbildung des Monitors 5 die Neigung durch Rasterungen an der quer zur Fahrzeuglängsrichtung verlaufenden Klappachse 5' auf die jeweilige Augenhöhe des Fahrers eingestellt werden. Die Aufklapprichtung des Monitors 5 ist hierbei vom Fahrer 7 weg ausgerichtet, kann jedoch auch entgegengesetzt verlaufen, wie dies für den in Strichpunktlinien dargestellten Monitor 5 an der vorderen Kante 6a und durch den Doppelpfeil angedeutet ist. In letzterem Falle sollte die Oberfläche des Monitors 5 aus einem besonders kratzfestem Material gebildet sein, was jedoch ohnehin im allgemeinen gegeben ist, insbesondere wenn der Monitor 5 als LCD-Display mit einer Glasplatte als Oberfläche ausgebildet ist.

In Fig. 2 ist die Informationseinrichtung 1 so dargestellt, wie sie der Fahrer 7 wahrnimmt. Wie ersichtlich, ist der Monitor 5 in aufgeklappter Betriebsstellung bevorzugt mittig über der höchsten Stelle des Lenkradkranzes 8 angeordnet. Diese Anordnung bietet zudem den Vorteil, daß am Umfang des Monitors 5, hier an der unteren Kante oder an dem zum Fahrer 7 hin gewandten Rand der Ausgabeeinheit 4 eine Vielzahl von Bedienknöpfen 9 angeordnet werden können. Hierdurch kann die Informationseinrichtung 1 alternativ oder ergänzend zu der Eingabeeinheit 3 auf dem Mitteltunnel bedient werden. Insbesondere ist hierbei von Vorteil, daß die Bedienknöpfe 9 auch bei auf dem Lenkradkranz 8 aufgelegten Händen per Fingerdruck einfach bedienbar sind. Hierdurch wird ein wesentlicher Beitrag zur Verkehrssicherheit geleistet, da der Fahrer 7 zur Bedienung der Ausgabeeinheit 4, z.B. zur Einstellung der Helligkeit auf dem Monitor 5 die Hände nicht vom Lenkrad nehmen muß und die Straße auch hierbei im Blickfeld des Fahrers 7 bleibt. Der Monitor 5 kann jedoch auch insbesondere bei kastenförmigen Blendschutz-Abdeckungen 6' etwas von der Mittelachse nach rechts oder links abgerückt sein, wobei dessen Bedienknöpfe 9 jedoch noch vorteilhafterweise in Griffweite der auf dem Lenkradkranz 8 aufgelegten Fahrerhände bleibt

Der flach ausgebildete Monitor 5 und die ebenso flachbauende Ausgabeeinheit 4, die neben den elektronischen Ansteuerungselementen für den Monitor 5 auch Datenspeicher enthalten kann, ist bevorzugt an den Schnellverschlüssen 10 bzw. der klammerartigen Umgriffshalterung an der vorderen Kante 6a der Abdeckung 6' schnell aus dem Kraftfahrzeug ausbaubar, so daß die Informationseinrichtung 1 auch in mehreren Fahrzeugen genutzt werden kann. Insbesondere ist hierdurch auch eine günstige Nachrüstlösung möglich.

Die Informationseinrichtung 1 kann jedoch auch als Einheit mit dem hochklappbaren Monitor 5 in der Erstausrüstung beim Fahrzeughersteller eingebaut werden. Hierzu sind bevorzugt in der Abdeckung 6' eine oder mehrere Führungen, z.B. in Art einer Schwalbenschwanzführung versenkt angeordnet, so daß hieran mit entsprechenden Halterungsschienen 11 an der Unterseite der Ausgabeeinheit 4 diese in Fahrzeuglängsrichtung oder Fahrzeugquerrichtung auf die Abdeckung 6' aufschiebbar und fixierbar ist. Hierdurch läßt sich der Wechselvorgang der Informationseinrichtung 1 noch beschleunigen.

Insgesamt ergibt sich somit eine vielfältig nutzbare Informationseinrichtung 1, wobei sich diese aufklappbare Anordnung des Monitors 5 insbesondere für Navigationssysteme eignet, da in Nicht-Gebrauchsstellung praktisch kein zusätzlicher Platz beansprucht wird, in Gebrauchsstellung jedoch der Monitor 5 im direkten Blickfeld des Fahrers liegt und somit seine Aufmerksamkeit gewinnt. Die Klappbewegung des Monitors 5 kann hierbei auch durch das Navigationssystem selbst gesteuert werden. So kann der Monitor 5 z.B. nur dann automatisch aufgeklappt werden, wenn Änderungen in den Richtungshinweisen vorliegen. Wenn jedoch über längere Zeit keine Richtungshinweise vorliegen, beispielsweise bei einer längeren Autobahnfahrt, so kann der Monitor 5 wieder in seine Ruhestellung manuell oder motorisch zurückgeklappt werden. Erst bei Erreichen einer Stadtgrenze wird dann der Monitor 5 um die Klappachse 5' automatisch aufgeklappt, um dem Fahrer die erforderlichen Richtungshinweise geben zu können. Das Auslösen dieser Aufklappbewegung kann hierbei fahrzeugintern, jedoch auch durch eine entsprechende Ansteuerung von externer Seite aus (z. B. durch ein Funksignal eines stationären Verkehrsleitsystems an der Stadtgrenze) erfolgen.

## Patentansprüche

1. Informationseinrichtung für ein Kraftfahrzeug, mit einer Eingabeeinheit und einer Ausgabeeinheit mit Monitor, insbesondere für ein Navigationssystem zur Anzeige von Richtungshinweisen im Bereich der Armaturentafel (6) und im Blickfeld des Fahrers,
dadurch gekennzeichnet, daß
der Monitor (5) auf der Oberseite der Abdeckung (6') der Armaturentafel (6) aufklappbar angeordnet ist.

2. Informationseinrichtung nach Anspruch 1,
dadurch gekennzeichnet, daß
der Monitor (5) über dem Lenkradkranz (8) des Kraftfahrzeuges (2) und - in Seitenansicht (Fig. 1) gesehen - parallel zum Lenkradkranz (8) verlaufend angeordnet ist.

3. Informationseinrichtung nach Anspruch 1 oder 2,
dadurch gekennzeichnet, daß
die Aufklapprichtung des Monitors (5) vom Fahrer (7) weg ausgerichtet ist.

4. Informationseinrichtung nach Anspruch 1 oder 2,
dadurch gekennzeichnet, daß
die Aufklapprichtung des Monitors (5) zum Fahrer (7) hin ausgerichtet ist.

5. Informationseinrichtung nach einem der Ansprüche 1 bis 4,
dadurch gekennzeichnet, daß
am Umfang des Monitors (5) und/oder an dem zum Fahrer (7) zugewandten Rand der Ausgabeeinheit (4) Bedienknöpfe (9) vorgesehen sind, die vom Fahrer (7) bei auf dem Lenkradkranz (8) aufgelegten Händen bedienbar sind.

6. Informationseinrichtung nach einem der Ansprüche 1 bis 5,
dadurch gekennzeichnet, daß
die Ausgabeeinheit (4) die dem Fahrer zugewandte Kante (6a) der Abdeckung (6') umgreift.

7. Informationseinrichtung nach einem der Ansprüche 1 bis 6,
dadurch gekennzeichnet, daß
die Ausgabeeinheit (4) mit Schnellverschlüssen (10) auf der Abdeckung (6') fixiert ist.

8. Informationseinrichtung nach einem der Ansprüche 1 bis 7,
dadurch gekennzeichnet, daß
der Monitor (5) als LCD-Display ausgebildet ist.

9. Informationseinrichtung nach einem der Ansprüche 1 bis 8,
dadurch gekennzeichnet, daß
der Monitor (5) mittig über der höchsten Stelle Lenkradkranzes (8) angeordnet ist.

10. Informationseinrichtung nach einem der Ansprüche 1 bis 9,
dadurch gekennzeichnet, daß
der Monitor (5) und/oder die Ausgabeeinheit (4) an wenigstens einer in der Abdeckung (6') angeordneten Halterungsschiene (11) aufschieb- und fixierbar ist.
